# FASCICULE DE BREVET EUROPEEN

(11) **EP 0 364 374 B1**
(45) Date de publication et mention de la délivrance du brevet: **27.01.1993**
(21) Numéro de dépôt: 89420377.7
(22) Date de dépôt: 05.10.1989
(51) Int. Cl.: C01B 15/029

(54) **Procédé de fabrication de péroxyde d'hydrogène**
Verfahren zur Herstellung von Wasserstoffperoxid
Process for manufacturing hydrogen peroxide

(30) Priorité: 12.10.1988 FR 8813671
(43) Date de publication de la demande: 18.04.1990
(73) Titulaire: ELF ATOCHEM S.A., 92800 Puteaux (FR)
(72) Inventeur: Pralus, Christian, F-69450 Saint-Cyr-au-Mont-d'Or (FR); Schirmann, Jean-Pierre, F-69600 Oullins (FR)

(56) Documents cités:
- EP-A- 0 132 294
- DE-C- 296 357
- FR-A- 2 334 622
- GB-A- 120 045
- GB-A- 1 490 925

## Description

La présente invention concerne un procédé de fabrication de peroxyde d'hydrogène à partir d'hydrogène et d'oxygène en présence d'un milieu aqueux contenant un catalyseur à base d'un métal noble du groupe VIII de la table périodique ou groupe du platine en l'absence d'un composé organique.

Il est connu de fabriquer le peroxyde d'hydrogène selon un tel procédé et, par exemple, les brevets des Etats Unis d'Amérique n°4681751, n°4661337, n°4279883, n°4009252 ou la demande de brevet européen n°0274830, illustrent la technique connue.

Celle-ci évite certes le danger inhérent à la présence d'un composé organique mais laisse subsister le danger d'explosion lié au seul mélange d'hydrogène et d'oxygène, sauf à s'imposer la dilution de ce mélange par un inerte en proportion très élevée, ou un rapport oxygène/hydrogène prédéterminé, ou encore des investissements élevés dans le domaine du contrôle des débits des gaz et de leur mélange.

Il a maintenant été trouvé un procédé, objet de la présente invention, qui satisfait au critère de sécurité, permet tout choix des proportions d'hydrogène et d'oxygène engagées et facilité le recyclage de l'un et de l'autre.

La présente invention consiste en un procédé catalytique de fabrication de peroxyde d'hydrogène par réaction d'hydrogène avec l'oxygène à une pression supérieure à la pression atmosphérique dans un milieu aqueux exempt de composé organique et contenant comme catalyseur un métal noble du groupe du platine, procédé comportant :
- une première étape dans laquelle le milieu aqueux est au contact d'hydrogène,
- une seconde étape dans laquelle le milieu aqueux résultant de la première étape est au contact d'oxygène et d'hydrogène,

caractérisé en ce que l'hydrogène dans la seconde étape est celui qui subsiste avec le milieu aqueux résultant de la première étape, après que sa quantité ait été suffisamment réduite pour qu'avec l'oxygène la phase gazeuse dans la deuxième étape soit non inflammable et non explosive.

Pour ne laisser subsister avec le milieu aqueux résultant de la première étape que la partie désirée d'hydrogène pour la deuxième étape on peut par exemple éliminer la partie non désirée d'hydrogène par détente à une pression pratiquement égale à la pression atmosphérique puis balayage de la phase gazeuse par un gaz inerte comme l'azote.

Cette façon de faire convient à une réalisation du procédé en discontinu.

Dans le même but que ci-dessus on peut aussi soustraire le milieu aqueux résultant de la première étape de l'ensemble milieu aqueux-phase gazeuse.

Cette façon de faire convient à une réalisation du procédé en continu.

En continu, comme en discontinu, le milieu aqueux qui est récupéré de la seconde étape peut être à nouveau soumis au procédé de l'invention.

Pour ce qui concerne l'inflammabilité ou l'explosivité de la phase gazeuse, on peut se reporter par exemple au Bulletin 503, Bureau of Mines, 1952, "Limits of flammability of Gases and vapors", par H.F. COWARD et G.W. JONES.

Le procédé de l'invention, sauf bien entendu pour ce qui le caractérise, peut être réalisé comme les procédés connus.

Par exemple, le milieu aqueux peut être de l'eau uniquement mais il est de préférence constitué d'une solution aqueuse contenant un acide comme l'acide chlorhydrique et encore, le cas échéant, par exemple des ions tels que les ions halogénures, des stabilisants du peroxyde d'hydrogène comme un phosphate.

En ce qui concerne le catalyseur, il est de préférence mis en oeuvre à l'état supporté. Parmi les métaux nobles du groupe du platine, ce métal même et le palladium sont souvent préférés.

Le procédé est réalisé en réacteur résistant à la pression et à la corrosion, étanche, en particulier à l'hydrogène, et muni des divers systèmes nécessaires et habituels comme, par exemple, de réglage de la température et de la pression.

Pour plus d'informations sur le milieu aqueux, sur le catalyseur et sur l'appareillage, on peut se reporter aux descriptions de chacun d'eux, fournies, par exemple, par les brevets des Etats Unis d'Amérique n°3336112, n°3361533, n°4009252, n°4279883, n°4681751 et la demande de brevet européen n°0274830.

La température à laquelle est réalisé le procédé est le plus généralement comprise entre environ -10°C et +30°C.

La pression d'hydrogène appliquée dans la première étape peut être comprise entre des limites assez éloignées, par exemple entre environ 5 bars et 100 bars.

La pression d'oxygène appliquée dans la seconde étape peut être comprise entre des limites assez éloignées, par exemple entre environ 5 bars et 100 bars.

Les exemples suivants, donnés à titre indicatif mais non limitatif, illustrent l'invention.

### Exemple 1 :

Dans un autoclave métallique de 0,3 litre dont les parois comme les équipements internes, tels que ceux assurant l'agitation ou la connaissance de la température, sont protégés par un revêtement de polytétrafluoroéthylène, on met en contact un milieu aqueux constitué de 20 cm³ d'une solution aqueuse d'acide chlorhydrique 0,1 N qui contiennent 0,03 g d'un catalyseur formé de 5 % de palladium sur charbon et commercialisé par la société Engelhard, avec 50 bars d'hydrogène, pendant 3 heures sous agitation à une température égale à +10°C.

Au terme de ces 3 heures, le milieu de réaction que constituent dans l'autoclave la phase gazeuse et, à son contact, le milieu aqueux contenant le catalyseur, est amené à pression pratiquement atmosphérique toujours à +10°C mais sans agitation, puis un courant d'azote est admis dans la phase gazeuse de l'autoclave jusqu'à ce qu'elle contienne moins de 4,5 % d'hydrogène en volume.

On ajoute alors dans l'autoclave une pression d'oxygène égale à 70 bars et on laisse la phase gazeuse et le milieu aqueux en contact à +10°C sous agitation durant 20 minutes.

Au terme de cette durée, le milieu aqueux contient 5,1 mg. de peroxyde d'hydrogène.

### Exemple 2:

L'exemple 1 est répété mais la quantité de catalyseur mis en oeuvre est cette fois de 0,3 g. Après intervention de l'oxygène, le milieu aqueux contient 10 mg. de peroxyde d'hydrogène.

### Exemple 3:

En procédant comme dans l'exemple 1 mais en mettant en oeuvre, au lieu de 0,03 g. du catalyseur au palladium, 0,03 g. d'un catalyseur constitué de 10 % de platine sur charbon, commercialisé par la société MERCK, le milieu aqueux contient après intervention de l'oxygène 6 mg. de peroxyde d'hydrogène.

## Revendications

1. Procédé catalytique de fabrication de peroxyde d'hydrogène par réaction d'hydrogène avec l'oxygène à une pression supérieure à la pression atmosphérique, dans un milieu aqueux exempt de composé organique et contenant comme catalyseur un métal noble du groupe du platine, procédé comportant
- une première étape dans laquelle le milieu aqueux est au contact d'hydrogène,
- une seconde étape dans laquelle le milieu aqueux résultant de la première étape est au contact d'oxygène et d'hydrogène,
caractérisé en ce que l'hydrogène dans la seconde étape est celui qui subsiste avec le milieu aqueux résultant de la première étape, après que sa quantité ait été suffisamment réduite pour qu'avec l'oxygène la phase gazeuse dans la deuxième étape soit non inflammable et non explosive.

2. Procédé selon la revendication 1, caractérisé en ce que, pour ne laisser subsister avec le milieu aqueux résultant de la première étape que la partie désirée d'hydrogène dans la seconde étape, la partie non désirée d'hydrogène est éliminée par détente jusqu'à une pression pratiquement égale à la pression atmosphérique puis balayage de la phase gazeuse par un gaz inerte comme l'azote.

3. Procédé selon la revendication 1, caractérisé en ce que, pour ne laisser subsister avec le milieu aqueux résultant de la première étape que la partie désirée d'hydrogène dans la seconde étape, ledit milieu aqueux est soustrait de l'ensemble milieu aqueux-phase gazeuse.

4. Procédé selon l'une des revendications 1 à 3, caractérisé en ce que la pression d'hydrogène appliquée dans la première étape est comprise entre 5 bars et 100 bars.

5. Procédé selon l'une des revendications 1 à 4, caractérisé en ce que la pression d'oxygène appliquée dans la seconde étape est comprise entre 5 bars et 100 bars.

6. Procédé selon l'une des revendications 1 à 5, caractérisé en ce que la température à laquelle est réalisée le procédé est comprise entre -10°C et + 30°C.

7. Procédé selon l'une des revendications 1 à 6, caractérisé en ce que le métal noble est le platine ou le palladium.

8. Procédé selon l'une des revendications 1 à 7, caractérisé en ce que le milieu aqueux contient des ions halogénures.

9. Procédé selon l'une des revendications 1 à 8, caractérisé en ce qu'il est répété avec le milieu aqueux récupèré de la seconde étape.

## Claims

1. Catalytic process for the manufacture of hydrogen peroxide by reaction of hydrogen with oxygen at a pressure above atmospheric pressure, in an aqueous medium free from any organic compound and containing as catalyst a noble metal of the platinum group, process comprising
- a first stage in which the aqueous medium is in contact with hydrogen,
- a second stage in which the aqueous medium resulting from the first stage is in contact with oxygen and hydrogen,
characterised in that the hydrogen in the second stage is that which remains with the aqueous medium resulting from the first stage after its quantity has been sufficiently reduced so that the gaseous phase in the second stage is nonflammable and nonexplosive with oxygen.

2. Process according to Claim 1, characterised in that, in order to allow to remain with the aqueous medium resulting from the first stage only the desired part of hydrogen in the second stage, the undesired part of hydrogen is removed by decompression to a pressure which is practically equal to atmospheric pressure and then purging the gaseous phase with an inert gas such as nitrogen.

3. Process according to Claim 1, characterised in that, in order to allow to remain with the aqueous medium resulting from the first stage only the desired part of hydrogen in the second stage, the said aqueous medium is drawn off from the combination aqueous medium-gaseous phase.

4. Process according to one of Claims 1 to 3, characterised in that the hydrogen pressure applied in the first stage is between 5 bars and 100 bars.

5. Process according to one of Claims 1 to 4, characterised in that the oxygen pressure applied in the second stage is between 5 bars and 100 bars.

6. Process according to one of Claims 1 to 5, characterised in that the temperature at which the process is carried out is between -10°C and +30°C.

7. Process according to one of Claims 1 to 6, characterised in that the noble metal is platinum or palladium.

8. Process according to one of Claims 1 to 7, characterised in that the aqueous medium contains halide ions.

9. Process according to one of Claims 1 to 8, characterised in that it is repeated with the aqueous medium recovered from the second stage.

## Patentansprüche

1. Katalytisches Herstellungsverfahren für Wasserstoffperoxid durch Reaktion des Wasserstoffs mit Sauerstoff bei einem höheren als dem Atmosphärendruck in einem wässrigen Milieu, das von organischen Verbindungen befreit ist und als Katalysator ein Edelmetall der Platingruppe enthält, dieses Verfahren umfaßt
- eine erste Stufe, in der das wässrige Milieu mit Wasserstoff in Kontakt ist,
- eine zweite Stufe, in der das aus der ersten Stufe erhaltene wässrige Milieu mit Sauerstoff und Wasserstoff in Kontakt ist,
dadurch gekennzeichnet,
daß der Wasserstoff in der zweiten Stufe der ist, der mit dem wässrigen, aus der ersten Stufe erhaltenen Milieu vorhanden ist, nachdem seine Menge ausreichend verringert worden ist, um mit dem Sauerstoff der Gasphase im zweiten Schritt nicht brennbar und nicht explosiv zu sein.

2. Verfahren nach Anspruch 1, dadurch gekennzeichnet, daß man, um in der zweiten Stufe nur den gewünschten Wasserstoffteil mit dem wässrigen, aus der ersten Stufe erhaltenen Milieu fortbestehen zu lassen, den unerwünschten Wasserstoffteil durch Entspannung bis zu einem Druck, der praktisch gleich dem Atmosphärendruck ist, entfernt und anschließend die Gasphase mit einem Inertgas wie Stickstoff spült.

3. Verfahren nach Anspruch 1, dadurch gekennzeichnet, daß man, um in der zweiten Stufe nur den gewünschten Wasserstoffteil mit dem wässrigen, aus der ersten Stufe erhaltenen Milieu fortbestehen zu lassen, dieses wässrige Milieu aus dem System Wässriges Milieu-Gasphase entfernt.

4. Verfahren nach einem der Ansprüche 1 bis 3, dadurch gekennzeichnet, daß der in der ersten Stufe angewandte Wasserstoffdruck zwischen 5 und 100 bar beträgt.

5. Verfahren nach einem der Ansprüche 1 bis 4, dadurch gekennzeichnet, daß der in der zweiten Stufe angewandte Sauerstoffdruck zwischen 5 und 100 bar beträgt.

6. Verfahren nach einem der Ansprüche 1 bis 5, dadurch gekennzeichnet, daß die Verfahrenstemperatur zwischen -10°C und +30°C beträgt.

7. Verfahren nach einem der Ansprüche 1 bis 6, dadurch gekennzeichnet, daß das Edelmetall Platin oder Palladium ist.

8. Verfahren nach einem der Ansprüche 1 bis 7, dadurch gekennzeichnet, daß das wässrige Milieu Halogenidionen enthält.

9. Verfahren nach einem der Ansprüche 1 bis 8, dadurch gekennzeichnet, daß man es mit dem aus der zweiten Stufe wiedergewonnenen wässrigen Milieu wiederholt.
